# EUROPEAN PATENT APPLICATION

(11) **EP 4 814 886 A1**
(43) Date of publication of application: **30.09.2026**
(21) Application number: 26160131.4
(22) Date of filing: 23.02.2026
(51) Int. Cl.: G06V 10/70, G06V 20/52, G06V 20/64

(54) **GENERATING SENSOR-TO-CONTAINER TRANSFORMATION FOR FILL LEVEL ESTIMATION AND CONTROL IN AN UNLOADING OPERATION**

(30) Priority: 27.03.2025 US 202519092802
(71) Applicant: Deere & Company, Moline, IL 61265 (US)
(72) Inventor: Bothe, Mahesh, 68163 Mannheim (DE); Reddy, Vamshi, 68163 Mannheim (DE); Wagh, Rasika, 68163 Mannheim (DE)
(74) Representative: Holst, Sönke

(57) **Abstract**

Container dimension data, indicative of a coordinate system origin point and dimensions of a container, are obtained. A frame of three-dimensional (3D) data corresponding to the container is captured by a sensor. The frame is processed to identify a feature of the container, in a coordinate system of the sensor. A sensor-to-container transformation is computed based upon the origin and point and dimensions of the container, and the feature identified in the frame. The sensor-to-container transformation is used to transform sensor data, corresponding to a fill level of material in the container, from the coordinate system of the sensor to the coordinate system of the container. The transformed sensor data is used to estimate the fill level in the container. A control signal is generated based upon the fill level.

## Description

### FIELD OF THE DESCRIPTION

The present description generally relates to machines that load material into receiving vehicles or other containers. More specifically, but not by limitation, the present description relates to automatic generation of a sensor-to-container transformation for performing fill level estimation and control.

### BACKGROUND

There are a wide variety of different types of vehicles that load material into other vehicles or other containers. Some such vehicles include agricultural vehicles such as forage harvesters or other harvesters (such as combine harvesters, sugarcane harvesters, silage harvesters, etc.), that harvest grain or other crops. Such harvesters often unload material into carts, which may be pulled by tractors, or semitrailers, as the harvesters are moving. Other vehicles perform unloading into a stationary vehicle, such as when a tractor-pulled grain cart unloads material into a haulage vehicle, such as a semi-truck. Other vehicles that unload material into receiving vehicles include construction vehicles, such as cold planers that unload into a dump truck, and other vehicles.

Taking an agricultural harvester as an example of an unloading vehicle, while harvesting in a field using a forage harvester or combine harvester, an operator attempts to control the harvester to maintain harvesting efficiency, during many different types of conditions. The soil conditions, crop conditions, etc. can all change. This may result in the operator changing control settings. This means the operator needs to devote a relatively large amount of attention to controlling the forage harvester or combine harvester.

At the same time, a semitruck or tractor-pulled cart (a receiving vehicle), is often in position relative to the harvester (e.g., alongside the harvester or behind the harvester) so that the harvester can fill the semitrailer or cart, while moving through the field. In some current systems, this requires the operator of the harvester to control the position of the unloading spout and flap so that the truck or cart is filled evenly, but not over filled. Even a momentary misalignment between the spout and the truck or cart may result in hundreds of pounds of harvested material being dumped on the ground, rather than in the truck or cart.

Further, there may be multiple different unloading operations that occur during a harvesting operation. For instance, taking a combine harvester as an example, the combine harvester may unload harvested material into a material transfer vehicle, such as a tractor-pulled grain cart. Once the material transfer vehicle is filled to a desired fill level, the material transfer vehicle navigates toward a container, such as a semi-trailer, pulls alongside the container, and transfers the harvested material to the container. As the material transfer vehicle approaches the container, a control system or operator positions an unloading spout or auger, and then, once alongside the container, engages the unloading auger on the material transfer vehicle to unload the harvested material from the material transfer vehicle into the container.

The discussion above is merely provided for general background information and is not intended to be used as an aid in determining the scope of the claimed subject matter.

### SUMMARY

Container dimension data, indicative of a coordinate system origin point and dimensions of a container, are obtained. A frame of three-dimensional (3D) data corresponding to the container is captured by a sensor. The frame is processed to identify a feature of the container, in a coordinate system of the sensor. A sensor-to-container transformation is computed based upon the origin and point and dimensions of the container, and the feature identified in the frame. The sensor-to-container transformation is used to transform sensor data, corresponding to a fill level of material in the container, from the coordinate system of the sensor to the coordinate system of the container. The transformed sensor data is used to estimate the fill level in the container. A control signal is generated based upon the fill level

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter. The claimed subject matter is not limited to implementations that solve any or all disadvantages noted in the background.

### BRIEF DESCRIPTION OF THE DRAWINGS

FIG. 1 is a partial pictorial, partial block diagram of one example of an unloading system.
FIG. 2 is a partial pictorial, partial block diagram of one example of an unloading system.
FIG. 3 is a partial pictorial, partial block diagram of one example of an unloading system.
FIG. 4 is a partial pictorial, partial block diagram of one example of an unloading system.
FIG. 5 is a partial pictorial, partial block diagram of one example of an unloading system.
FIG. 6 is a pictorial illustration showing one example of a an operator interface device in displaying a fill level of material in a container.
FIG. 7 is a block diagram showing one example of a fill control system.
FIGS. 8A and 8B (collectively referred to herein as FIG. 8) illustrate a flow diagram showing one example of the operation of the fill control system.
FIG. 9 is a pictorial illustration of one example of a container coordinate system.
FIG. 10 is a pictorial illustration of one example of a sensor coordinate system.
FIG. 11 is a block diagram showing one example of the system shown in other figures, deployed in a remote server environment.
FIGS. 12, 13, and 14 show examples of mobile devices that can be used in the architectures and systems shown in other FIGs.
FIG. 15 is a block diagram showing one example of a computing environment that can be used in the systems and architectures shown in other FIGs.

### DETAILED DESCRIPTION

For the purposes of promoting an understanding of the principles of the present disclosure, reference will now be made to the examples illustrated in the drawings, and specific language will be used to describe the same. It will nevertheless be understood that no limitation of the scope of the disclosure is intended. Any alterations and further modifications to the described devices, systems, methods, and any further application of the principles of the present disclosure are fully contemplated as would normally occur to one skilled in the art to which the disclosure relates. In particular, it is fully contemplated that the features, components, and/or steps described with respect to one example may be combined with the features, components, and/or steps described with respect to other examples of the present disclosure.

The present discussion proceeds with respect to an unloading vehicle being an agricultural harvester, but it will be appreciated that the present discussion is also applicable to construction machines, material transfer vehicles, or other material unloading vehicles that unload material into a receiving vehicle or other container. As discussed above, it can be very difficult for an operator to maintain high efficiency in controlling a harvester or other unloading vehicle, and to optimally monitor the position of the receiving vehicle or container during an unloading operation. This difficulty can even be exacerbated when the receiving vehicle is located behind the harvester (such as a forage harvester), so that the harvester is executing a rear unloading operation, but the difficulty also exists in side-by-side unloading scenarios.

To address these issues, some automatic fill control systems have been developed to automate portions of the unloading process. One such automatic fill control system uses a stereo camera on the harvester or other unloading vehicle to capture an image of the receiving vehicle or other container. An image processing system detects point cloud data, from which material height within the receiving vehicle or container can be obtained. The material height can be used to automatically aim the spout toward empty spots and control the flap position (and thus material trajectory) to achieve a more even fill, while reducing spillage. Such systems can control the unloading vehicle to fill the receiving vehicle or other container according to a fill strategy (such as front-to-back, back-to-front, etc.) that is set by the operator or that is set in other ways.

In addition, some current unloading vehicles are provided with a machine synchronization control system. The unloading vehicle may, for instance, be a combine harvester so that the spout is not movable relative to the frame during normal unloading operations. Instead, the relative position of the receiving vehicle and the combine harvester is changed to fill the receiving vehicle as desired. Thus, in a front-to-back fill strategy, for instance, the relative position of the receiving vehicle, relative to the combine harvester, is changed so that the spout is first filling the receiving vehicle at the front end, and then gradually fills the receiving vehicle moving rearward. In such an example, the combine harvester and receiving vehicle may have machine synchronization systems which communicate with one another. When the relative position of the two vehicles is to change, the machine synchronization system on the combine harvester can send a message to the machine synchronization system on the receiving vehicle to "nudge" the receiving vehicle slightly forward or rearward relative to the combine harvester, as desired. By way of example, the machine synchronization system on the combine harvester may receive a signal from the fill control system on the combine harvester indicating that the fill height of material in the receiving vehicle that is currently being filled is approaching its desired fill level. In that case, the machine synchronization system on the combine harvester can send a "nudge" signal to the machine synchronization system on the receiving vehicle (e.g., to a tractor of a tractor-pulled the grain cart). The "nudge", once received by the machine synchronization system on the receiving vehicle, causes the receiving vehicle to automatically momentarily speed up or slow down, thus nudging the position of the receiving vehicle forward or rearward, respectively, relative to the combine harvester. By automatically it is meant, for example, that the operation is performed without further human involvement except, perhaps, to initiate or authorize the operation.

Similar operation can be achieved when the receiving vehicle is stationary (e.g., when a tractor-pulled grain cart is unloading into a semi-trailer). In that case, the stereo camera on a spout of the grain cart captures point cloud data corresponding to material being unloaded into the semi-trailer. The height of the material in the semi-trailer is computed or estimated based upon the point cloud data. When the height of the material reaches a desired fill level, then the unloading vehicle (e.g., the tractor-pulled grain cart) is nudged forward to change the landing point of material in the semi-trailer.

To identify the fill level of material in the container based upon an image captured by an image capture device (e.g., a stereo camera or other sensor of three-dimensional data), current systems identify a location and orientation of the stereo camera or other 3D sensor relative to a reference point on the unloading vehicle (e.g., relative to a location of a GPS receiver on a combine harvester). However, this calibration operation can be time-consuming and must be repeated if the location or orientation of the 3D sensor, relative to the reference point, is changed. Further, the calibration needs to be repeated if the 3D sensor is mounted on a movable element of the unloading vehicle so that the location and/or orientation of the 3D sensor changes with respect to the reference point.

The present discussion thus proceeds with respect to a system that receives the dimensions of the container (e.g., the dimensions of a semi-trailer or grain cart along with an origin point of a coordinate system of the container) and uses a 3D sensor to detect the coordinates of three points on the container. The three points may be in a known location on the container, such as three corner points, or three other points that lie in the same plane, in a coordinate system of the 3D sensor. Using the dimensions of the container and the coordinates of the three points in the sensor coordinate system, the present system calculates a transformation (e.g., a transformation matrix) that can be used to transform points detected in the sensor coordinate system to points in the container coordinate system. The transformation can be generated for every frame captured by the 3D sensor and can be used to transform point cloud data in that frame, corresponding to the material loaded into the container, from the coordinate system of the sensor to the coordinate system of the container. The transformed point cloud data can then be used to estimate the fill level of material in the container. Control signals can be generated based upon the estimated fill level.

This eliminates the need to perform a calibration step to find the location and orientation of the sensor relative to a reference point on the unloading vehicle for fill estimation.

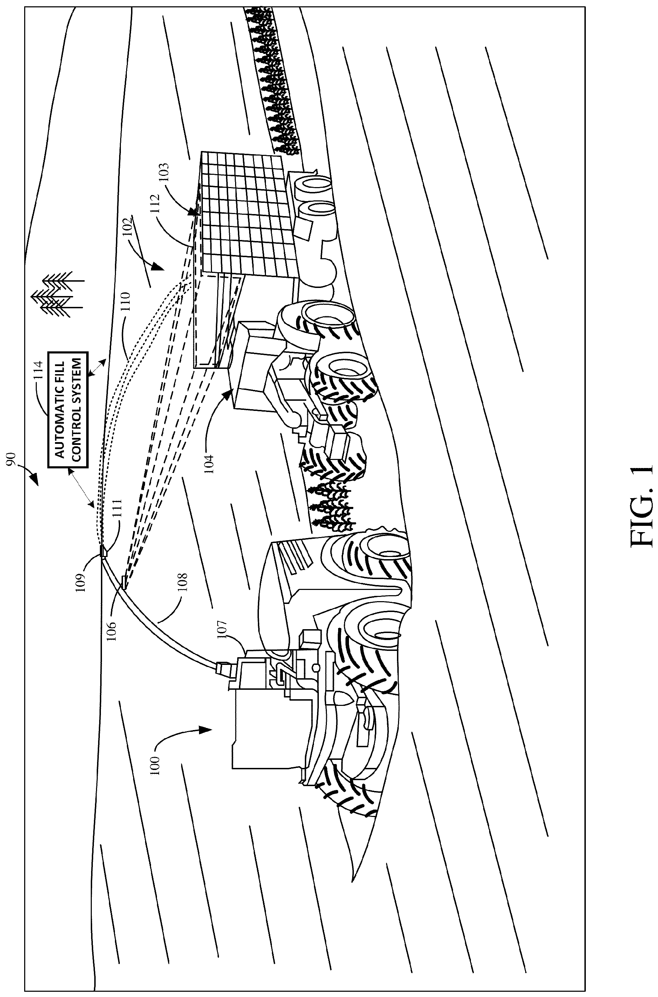

FIG. 1 is a pictorial illustration showing one example of an unloading system 90 with a self-propelled forage harvester 100 (e.g., a material unloading vehicle also referred to as a leading vehicle) filling a tractor-pulled grain cart (or receiving vehicle) 102. Cart 102 thus defines an interior that forms a receiving vessel 103 for receiving harvested material through a receiving area 112. In the example shown in FIG. 1, a tractor 104 (a towing vehicle also referred to as a following vehicle), that is pulling grain cart 102, is positioned directly behind forage harvester 100 Also, in the example illustrated in FIG. 1, forage harvester 100 has a 3D sensor such as a stereo camera 106 mounted on the spout 108 through which the harvested material 110 is traveling. The spout 108 can be pivotally or rotatably mounted to a frame 107 of harvester 100. In the example shown in FIG. 1, the 3D sensor 106 is a stereo-camera or a mono-camera that captures an image (e.g., a still image or video) of the receiving area 112 of cart 102. It will also be noted, however, that 3D sensor 106 could be a RADAR sensor, a LIDAR sensor or another sensor that senses three-dimensional (3D) data. Also, in the example shown in FIG. 1, the receiving area 112 is defined by an upper edge, and corners, of the walls of cart 102.

In the example shown in FIG. 1, unloading system 90 includes an automatic fill control system 114 that includes image processing, as discussed above. It is noted that automatic fill control system 114 can be located on harvester 100, or on the receiving vehicle (e.g., on tractor 104 and/or grain cart 102). Automatic fill control system 114 can also be distributed among different locations (such as partially on harvester 100, partially on the receiving vehicle - tractor 104 and/or grain cart 102, partially at a remote computing system, such as a remote server computing system or cloud system) and/or elsewhere. Automatic fill control system 114 is shown as residing in a single location in FIG. 1 for the sake of example only.

Thus, the automatic fill control system 114 attempts to identify the location of the receiving area 112 by identifying the edges or walls of the receiving area and then uses point cloud data generated by the 3D sensor 106 to compute the height of harvested material in grain cart 102, and the location of that material in grain cart 102. The system can thus automatically control the position of spout 108 and flap 109 to direct the trajectory of material 110 into the receiving area 112 of grain cart 102 to obtain an even fill throughout the entire length and width of grain cart 102, while not overfilling grain cart 102. By automatically, it is meant, for example, that the operation is performed without further human involvement except, perhaps, to initiate or authorize the operation.

In one example, automatic fill control system 114 processes an image captured by 3D sensor 106 to identify three points (e.g., three coplanar corners or three other points) of the receiving area 112 of grain cart 102. Automatic fill control system 114 also receives the dimensions of grain cart 102 (e.g., the length, width, and height of grain cart 102 along with an origin point of the coordinate system for grain cart 102) and uses the dimensions of grain cart 102 and the coordinates of the three points (in the coordinate system of 3D sensor 106) to generate a transformation (e.g., a transformation matrix) that can be used to transform points in the coordinate system of 3D sensor 106 to points in the coordinate system of grain cart 102. The transformation can then be used to transform the point cloud data corresponding to the height of material in grain cart 102 from the coordinate system of 3D sensor 106 to the coordinate system of grain cart 102. The fill level of material can then be computed or estimated based upon the transformed point cloud data.

For example, when executing a back-to-front automatic fill strategy, the automatic fill control system 114 may attempt to move the spout and flap or a machine synchronization system can position the vehicles relative to one another, so the material begins landing at a first landing point in the back of vessel 103 of grain cart 102. Then, once a desired fill level is reached at the back of vessel 103, the automatic fill control system moves the spout and flap, or the machine synchronization system nudges the receiving vehicle to change the position of the vehicles relative to one another, so the material begins landing just forward of the first landing point in vessel 103. This continues until grain cart 102 is filled or until the unloading vehicle stops unloading material.

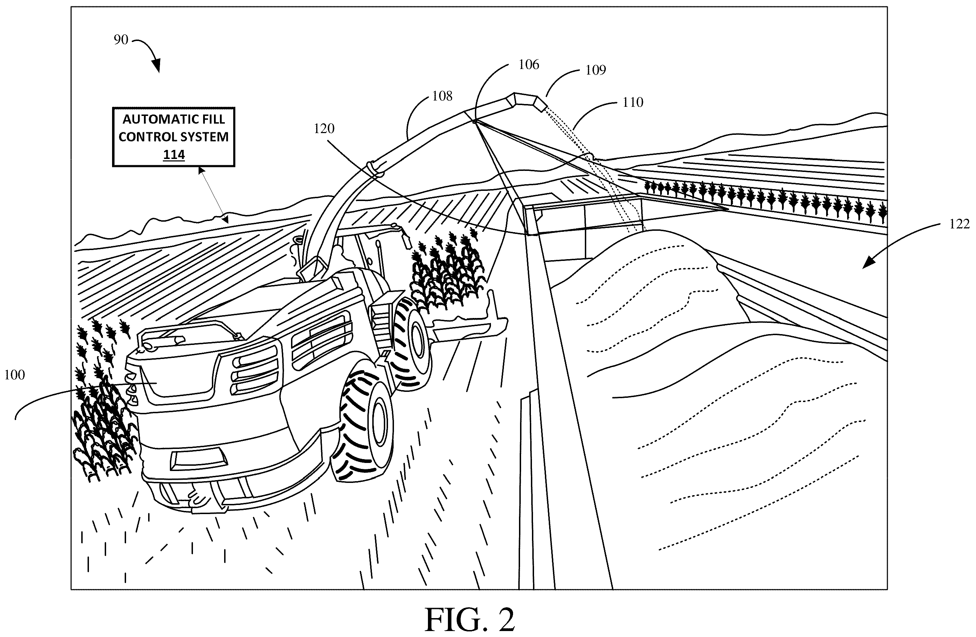

FIG. 2 is a pictorial illustration showing another example of unloading system 90 with self-propelled forage harvester 100, this time unloading material into a semi-trailer (or receiving vessel on a receiving vehicle) 122 in a configuration in which a semi-tractor (also referred to as a following vehicle) is pulling semi-trailer 122 alongside forage harvester 100. Therefore, the spout 108 and flap 109 are positioned to unload the harvested material 110 to fill trailer 122 according to a pre-defined side-by-side fill strategy. Again, FIG. 2 shows that camera or another 3D sensor 106 can capture an image (which can include a still image or video) of semi-trailer 122. In the example illustrated in FIG. 2, the field of view of camera or other 3D sensor 106 is directed toward the receiving area 120 of trailer 122 so that image processing can be performed to identify a landing point for the harvested material in trailer 122. A machine synchronization system can nudge the semi-trailer forward or rearward relative to harvester 100 to accomplish a fill strategy.

Also, automatic fill control system 114 can receive the dimensions of the semi-trailer 122 and can process the image captured by 3D sensor 106 to identify three points defining receiving area 120. Automatic fill control system 114 can then use the dimensions of semi-trailer 122 and the coordinates of the three points in the coordinate system of 3D sensor 106 to generate a transformation that can be used to transform points that are in the coordinate system of 3D sensor 106 to points that are in the coordinate system of semi-trailer 122. The transformed points can then be used to compute or estimate the fill level of material at the current landing point in semitrailer 122.

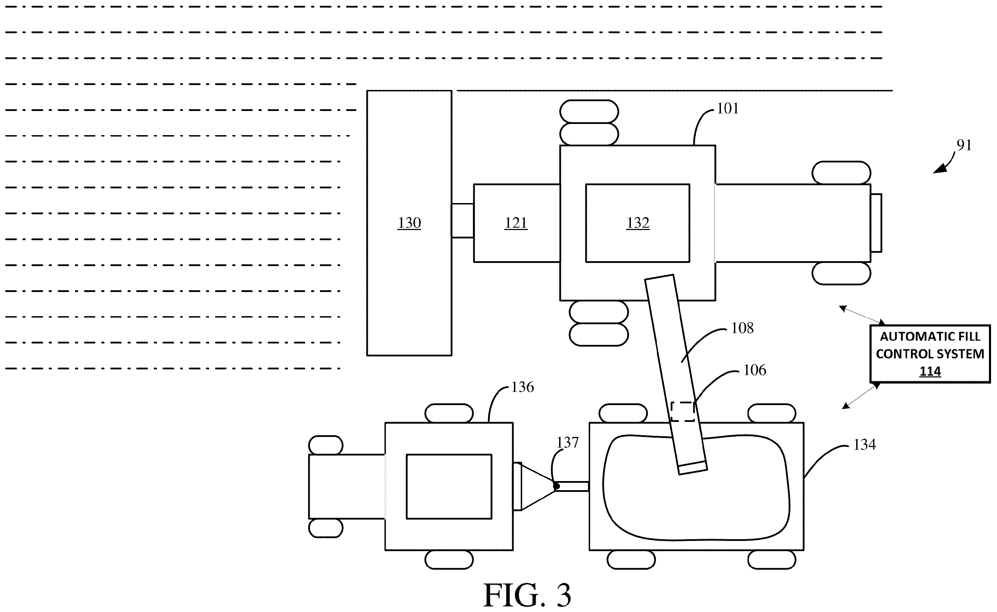

FIG. 3 shows an example of an unloading system 91 in which leading vehicle 101 is a combine harvester, with an operator's compartment 121 and with a header 130 that engages crop. The crop is processed and placed in a clean grain tank 132, where it is unloaded (such as using an auger) through spout 108 into a receiving vehicle 134 (e.g., a grain cart) that is pulled by a following vehicle 136 (e.g., a tractor). FIG. 3 shows that receiving vehicle 134 is coupled to following vehicle 136 at a hitch point, or pivot point, 137. When harvester 101 is a combine harvester, it may be that the spout 108 is not moved relative to the frame of harvester 101 during normal unloading operations. Instead, the relative position of the receiving vehicle 134 and the combine harvester 101 is changed to fill the receiving vehicle 134 as desired. Thus, if a front-to-back fill strategy is to be employed, then the relative position of the receiving vehicle 134, relative to the combine harvester 101, is changed so that the spout 108 is first filling the receiving vehicle 134 at the front end, and then gradually fills the receiving vessel moving rearward.

FIG.3 also shows that unloading system 91 includes automatic fill control system 114. Automatic fill control system 114 can receive the dimensions of receiving vehicle 134 and the location of three points of receiving vehicle 134 in the coordinate system of 3D sensor 106 (e.g., three coplanar corner points or three other points identified by processing an image captured by 3D sensor 106). Automatic fill control system 114 can then generate a transformation that can be used to transform point cloud data from the coordinate system of 3D sensor 106 to the coordinate system of the receiving vehicle 134. The transformed point cloud data can then be used to compute or estimate the fill level of material at a current landing point in receiving vehicle 134.

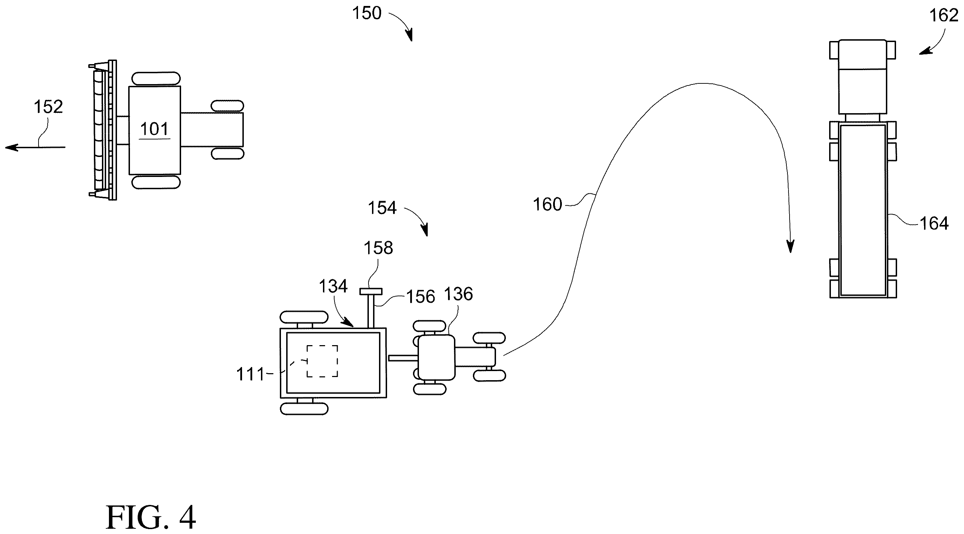

FIG. 4 is a pictorial illustration of one example of an unloading system 150. Some items are similar to those shown in unloading systems 90 and 91, and those items are similarly numbered. In unloading system 150, harvester 101 is moving through a field in a direction indicated by arrow 152. A material transfer vehicle 154 includes a propulsion vehicle (e.g., a tractor) 136 and a grain cart 134. Grain cart 134 is shown having a conveyor 156 and a spout 158 that are used to unload harvested material from grain cart 134. Conveyor 156 may be a conveyor (such as an auger) that conveys material from grain cart 134 through a housing and out an exit end of conveyor 156. Spout 158 may be disposed on an exit end to direct material as the material exits through the exit end of conveyor 156. FIG. 4 also shows that grain cart 134 has a gate 111 disposed at the bottom of grain cart 134. To facilitate the transfer of material out of grain cart 134, gate 111 is opened to a desired position which allows the grain to fall into a hopper or in another collection basin where the grain can be transferred by conveyor 156.

In the example shown in FIG. 4, grain cart 134 has been filled with harvested material from harvester 101 and is traveling along a travel path indicated by arrow 160 toward a container (e.g., in the example shown in FIG. 4 the container is a semi-truck) 162. To unload material from grain cart 134, an operator (a human operator, an autonomous operator, or a semi-autonomous operator) actuates an actuator to position conveyor 156 to a deployed position. Tractor 136 pulls the grain cart 134 alongside semi-trailer 164 so that the conveyor 136 can be engaged to transfer material from grain cart 134 into semi-trailer 164. In one example, the spout 158 is movable to change the direction of material exiting conveyor 156 and to thus change the landing point of material inside semi-trailer 164. Also, in one example, conveyor 156 is driven by a power take off on tractor 136, although it may be driven by other actuators as well. The speed of the power takeoff or other actuator can be controlled to change the landing point as well.

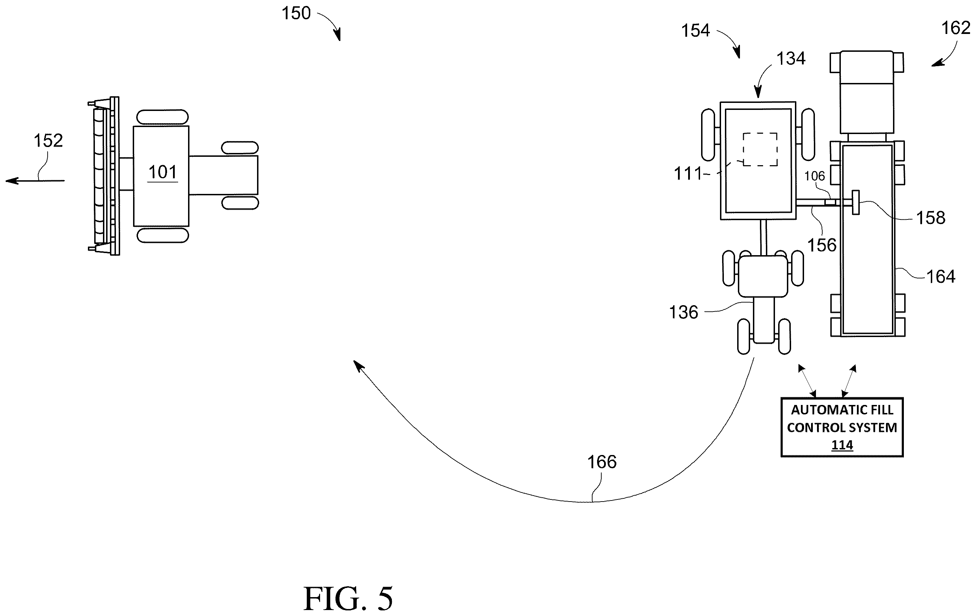

FIG. 5 is a partial pictorial, partial block diagram of agricultural system 150. Some items in FIG. 5 are similar to those shown in FIG. 4 and are similarly numbered. However, FIG. 5 shows that material transfer vehicle 154 has now pulled alongside haulage vehicle 162 so that the spout 158 is positioned over semi-trailer 164. Thus, material transfer vehicle 154 can be controlled to move along semi-trailer 164 as material is unloaded from grain cart 134 into semi-trailer 164.

Once the unloading operation is complete (e.g., when grain cart 134 is empty, or semi-trailer 164 is full), then material transfer vehicle 154 can continue along the route indicated by arrow 166 back to agricultural harvester 101 or to a different agricultural harvester or to a different location.

FIG. 5 also shows that automatic fill control system 114 can be used to process images generated by 3D sensor 106 and to estimate the fill level of material in semi-trailer 164. Automatic fill control system 114 can be configured to receive dimension information corresponding to the length, width, and height of semi-trailer 164, and may also receive point information indicative of the location of an origin point in the coordinate system of semi-trailer 164. Automatic fill control system 114 also identifies three points (such as three coplanar corner points, or three other points) defining a portion of the opening of the semi-trailer 164 in the captured image. Based upon the dimension information corresponding to semi-trailer 164 and based upon the location of the points in the coordinate system of 3D sensor 106, automatic fill control system 114 can generate a transformation that can be used to transform point cloud data points in the captured image, that are in the coordinate system of 3D sensor 106, into points in the coordinate system of semi-trailer 164. The transformed point cloud data points can be used to estimate the fill level of material in semi-trailer 164. Control signals can be generated based upon the estimated fill level to control the unloading operation.

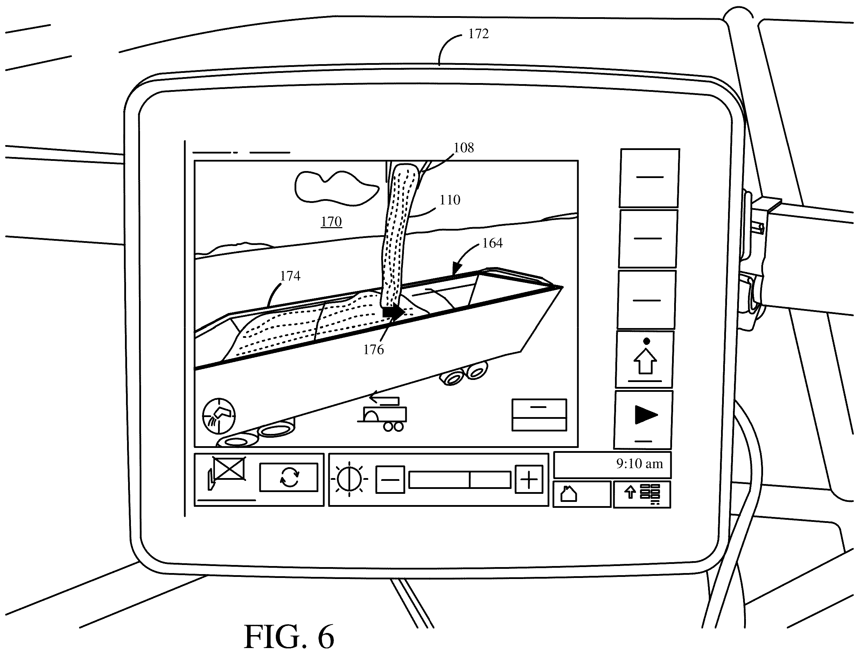

FIG. 6 is a pictorial illustration showing one example of an operator interface display 170 that can be displayed on a display mechanism 172, for the operator in an operator compartment of harvester 100, harvester 101, tractor 136, semi-truck 162, or on a display screen of a mobile device carried by the operator or in the operator compartment of receiving vehicles 100, 101, 136, 162, etc. The operator interface display 170 in FIG. 6 shows a view of images (static or video) captured by 3D sensor (in this case camera) 106. The image(s) show material 110 entering trailer 164. An image processing system in automatic fill control system 114 illustratively identifies three coplanar corner points on the perimeter of the opening 174 in trailer 164 (or three other points) and also processes point cloud data in the image of the material 110 in trailer 164 to determine the fill height relative to opening 174 and the fill level of material in semi-trailer 164.

FIG. 6 also shows that, once the fill level of material in semi-trailer 164 is detected and/or calculated, the fill level of material in semi-trailer 164 can be compared to a threshold fill level. In one example, in which the harvester 100 has an automatic fill control system 114 which fills trailer 164 according to a fill strategy (such as a back-to-front fill strategy, front-to-back fill strategy, etc.), a current landing position indicator (such as indicator 176) may be displayed to show the current landing position where material 110 is being loaded into trailer 164 through spout 108 and the direction that spout 108 is, or should be, moving relative to trailer 164 as the filling operation continues.

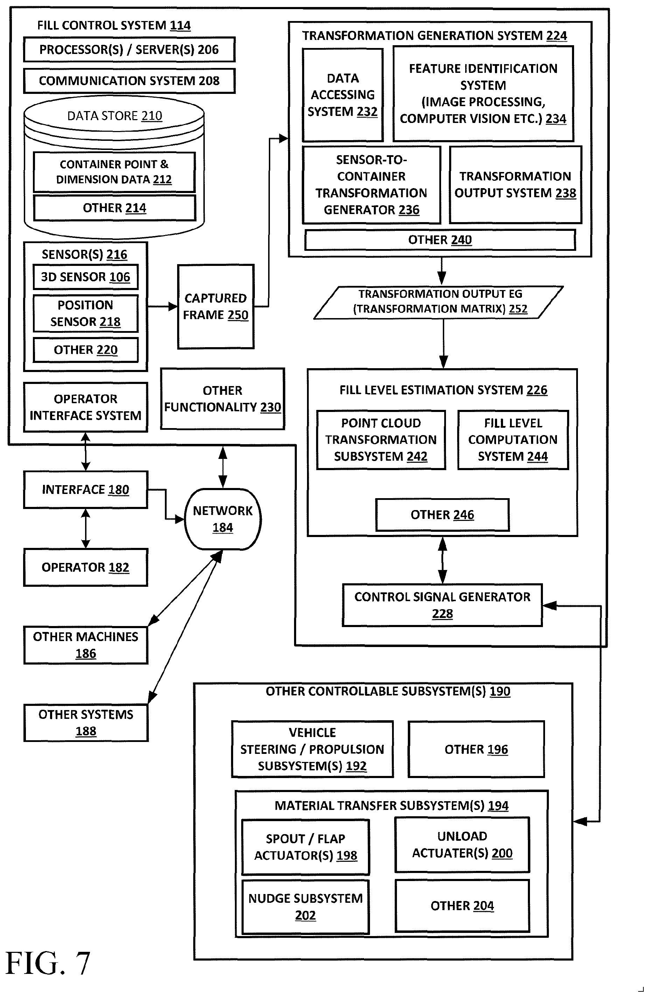

FIG. 7 is a block diagram showing one example of fill control system 114 in more detail. FIG. 7 shows that fill control system 114 can generate interfaces 180 for interaction by operator 182. Operator 182 can illustratively interact with interfaces 180 to control and manipulate portions of fill control system 114. In one example, fill control system 114 generates interfaces 180 over network 184. For instance, fill control system 114 can communicate over network 184 with a mobile device or other device to which operator 182 has access. Also, in one example, fill control system 114 can communicate with other machines 186 (e.g., other machines illustrated in FIGs. 1-5 above, or still other machines) and other systems 188. Other systems 188 may be farm manager systems, systems in remote server environments, or other systems.

FIG. 7 also shows that, in one example, fill control system 114 can communicate directly or over network 184 with other controllable subsystems 190. Other controllable subsystems 190 can include such things as vehicle steering and propulsion subsystem(s) 192 for one or both of the material unloading vehicle and the material receiving vehicle or container, material transfer subsystems 194, and other subsystems 196. Steering and propulsion subsystem(s) 192 may be one or more internal combustion engines, electric motors, transmissions, individual drive motors, or other devices that can be used to generate propulsion of one or more of the vehicles referenced herein as well as steering components that can be actuated to change the heading of such vehicles

Material transfer subsystem(s) 194 control the transfer of material from the unloading vehicle to the receiving vehicle or container. Thus, material transfer subsystem(s) 194 can include spout/flap actuators 198 which control the position of the spouts and/or flaps on the unloading vehicle, unload actuators 200 which may be fans, augers, elevators, conveyors, or other actuators that are actuated to transfer material from the unloading vehicle to the receiving vehicle or container, nudge subsystem 202 that is used to change the relative position of the unloading vehicle relative to the material receiving vehicle or container, and/or any of a wide variety of other material transfer subsystems 204.

In one example, network 184 may be a wide area network, a local area network, a cellular communication network, a Wi-Fi or Bluetooth network, a near field communication network, or any of a variety of other networks or combinations of networks.

FIG. 7 also shows that fill control system 114 can include processors or servers 206, communication system 208, data store 210 (which can include container point and dimension data 212 and other data 214), sensors 216 (which can include 3D sensor 106, position sensor 218, and other sensors 220), operator interface system 222, transformation generation system 224, fill level estimation system 226, control signal generator 228, and other functionality 230. Transformation generation system 224 can include data accessing system 232, feature identification system (e.g., image processing system, computer vision system, etc.) 234, sensor-to-container transformation generator 236, transformation output system 238, and other items 240. Fill level estimation system 226 can include point cloud transformation system 242, fill level computation system 244, and other items 246. Before describing the operation of fill control system 114 in more detail, a description of some of the items in fill control system 114, and their operation, will first be provided.

Communication system 208 illustratively enables communication of the various items in fill control system 114 with respect to one another. Therefore, communication system 208 may be a controller area network (CAN) bus and bus controller. Communication system 208 can also facilitate communication over network 184, such as a cellular communication system, a near field communication system, a Bluetooth or Wi-Fi communication system, a wide area network communication system, a local area network communication system, and/or any of a variety of other communication systems or combinations of systems.

Container point and dimension data 212 may identify an origin point in the coordinate system of the receiving vehicle or container that is being loaded, as well as the dimension data corresponding to that container. The dimension data may include the height, width, and length of the container. It will be noted that container point and dimension data 212 may be received by system 114 from an operator 182 through an interface 180, retrieved or downloaded from another system 188, or obtained or received in other ways. Also, it will be noted that container point and dimension data 212 can be obtained asynchronously, prior to an unloading operation, or during runtime, in which case the container point and dimension data 212 can be detected, measured, or received at runtime in another way.

3D sensor 106 can include a mono or stereo camera that captures a static image or video, a LIDAR sensor, RADAR sensor, or another sensor that that is configured to capture three-dimensional (3D) data corresponding to the receiving vehicle or container that is to be, or that is being, loaded.

Position sensor 218 senses the position of the vehicle on which it is deployed in a global or local coordinate system. Therefore, position sensor 218 may be a Global Navigation Satellite System (GNSS) receiver, a cellular triangulation system, a dead reckoning system, or any of a wide variety of other positioning systems.

Operator interface system 222 includes interface mechanisms that can be used by operator 182. Operator 182 me may be a manual operator, an automated operator, or a semi-automated operator. The operator interface mechanisms in operator interface system 222 can include a steering wheel, joysticks, levers, pedals, knobs, buttons, or other input mechanisms. Further, the interface mechanisms can include a display screen that displays information on interfaces 180 for operator 182 and may receive inputs from operator 182. For instance, a display may include actuatable elements such as icons, links, buttons, etc. The display screen may be a touch sensitive display screen, and the interface mechanisms may also include voice-related mechanisms, such as microphone, speaker, speech synthesis functionality, speech recognition functionality, among other things. Thus, the actuatable elements may be actuated by operator 182 using a point-and-click device, touch gestures, voice commands, etc.

Transformation generation system 224 receives or accesses the container point and dimension data 212 and receives a captured frame 250 that is captured by 3D sensor 106. For instance, where 3D sensor 106 is a stereo camera, captured frame 250 is an image captured by the stereo camera that provides three-dimensional information corresponding to a receiving vehicle or container. Based on the container point and dimension data 212 and the captured frame 250, transformation generation system 224 generates a transformation output (e.g., a transformation matrix) 252 that can be used to transform the coordinates of points in the coordinate system of 3D sensor 106 to points in the coordinate system of the receiving vehicle or container.

To generate transformation output 252, data accessing system 232 obtains the container point and dimension data 212, either from data store 212, from a sensor or detection algorithm or another system 188, from operator 182, or elsewhere. Feature identification system 234 receives the captured frame 250 and identifies a feature of the receiving vehicle or container in the captured frame 250. For instance, feature identification system 234 can identify three points (e.g., three coplanar corner points that define or partially define an opening of the receiving vehicle or container or three other points) corresponding to the receiving vehicle or container. Based on the container point and dimension data 212 and the identified feature (e.g., the three points), sensor-to-container transformation generator 236 generates a transformation that can be used to transform points from the sensor coordinate system of 3D sensor 106 to the coordinate system of the receiving vehicle or container. In one example, sensor-to-container transformation generator 236 uses a mean squared error algorithm which is configured such that the estimated transformation 252 minimizes the mean squared error between the transformed corner points and the corner points defined in the receiving vehicle or container coordinate system. Transformation output system 238 outputs the transformation output 252 to fill level estimation system 226.

In one example, the captured frame 250 will also include point cloud data corresponding to the material 110 that is transferred from the unloading vehicle to the receiving vehicle or container. The point cloud data is transformed using point cloud transformation system 242 from the coordinate system of 3D sensor 106 to the coordinate system of the receiving vehicle or container. Point cloud transformation system 242 applies the transformation output (e.g., the transformation matrix) 252 to the point cloud data points to transform those points from one coordinate system to the other. Based on the transformed point cloud data points, fill level computation system 244 computes the fill level of material in the receiving vehicle or container.

Control signal generator 228 then generates control signals based upon the estimated fill level. For instance, if the estimated fill level meets a threshold fill level, then control signal generator 228 may generate a control signal to cause the landing point of material 110 in the receiving vehicle or container to be shifted. Therefore, control signal generator 228 may generate a control signal to control the vehicle steering and/or propulsion subsystem(s) 192 of one or both of the vehicles to move the vehicle(s) forward or rearward relative to one another. In another example, control signal generator 228 may generate control signals to control the spout/flap actuators 198 to change the trajectory of material 110 exiting the unloading vehicle and entering the receiving vehicle or container. In yet another example, control signal generator 228 may generate a control signal to control unload actuators 200 to increase or decrease the velocity of material 110 to thus change the trajectory of material 110 as it exits the unloading vehicle and enters the receiving vehicle or container. In yet another example, control signal generator 228 can generate a control signal to control unload actuators 200 to stop unloading material into the receiving vehicle or container, such as where the receiving vehicle or container is filled to a desired fill level. In yet another example, control signal generator 228 generates a control signal to control nudge system 202 which sends nudge signals or commands between the machines to change the relative position of the unloading vehicle relative to the receiving vehicle or container. Control signal generator 228 can also generate control signals to control operator interface system 222 to update interfaces 180 for operator 182. Control signal generator 228 can also generate control signals to control communication system 208 to communicate with other machines 186, other systems 188, etc. based upon the estimated fill level.

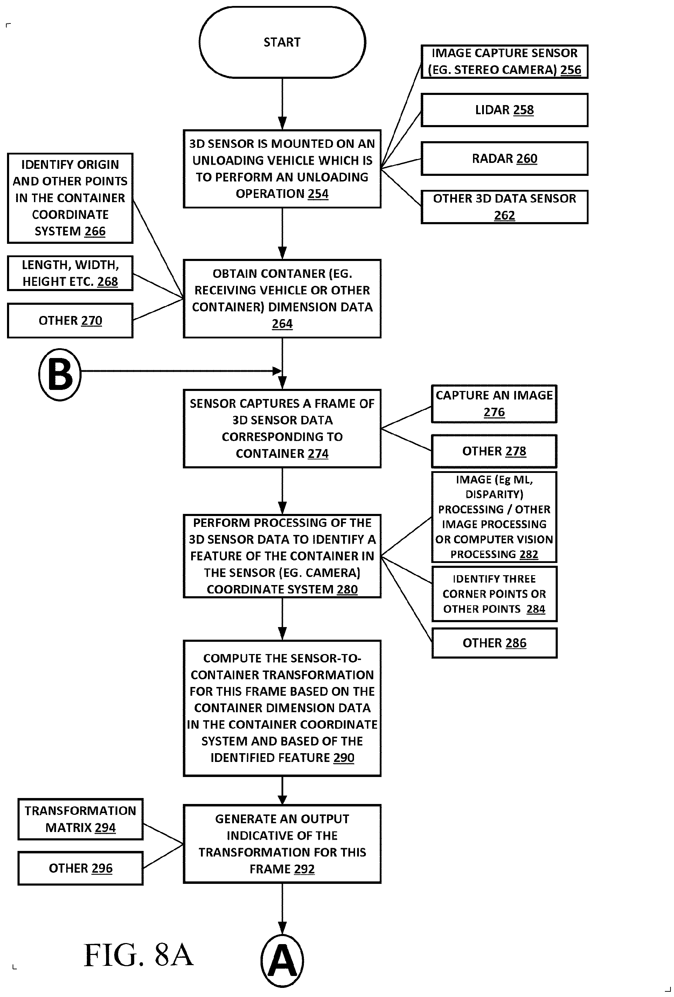

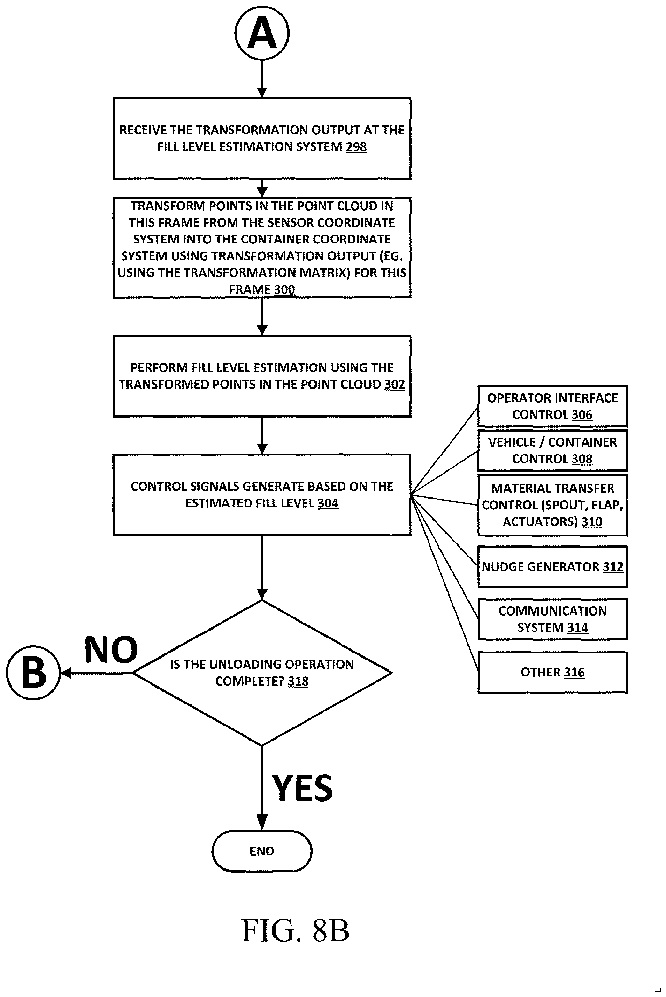

FIGs. 8A and 8B (hereinafter referred to as FIG. 8) show a flow diagram illustrating one example of the operation of fill control system 114 in more detail. It is first assumed that 3D sensor 106 is mounted on the unloading vehicle that is to perform an unloading operation to unload material into a receiving vehicle or container. It will be noted that the 3D sensor 106 can be mounted elsewhere, where it can capture 3D sensor data corresponding to the receiving vehicle or container, as well. Having a 3D sensor 106 mounted to capture 3D data corresponding to the unloading operation is indicated by block 254 in the flow diagram of FIG. 8. The 3D sensor 106 can be an image capture sensor (e.g., stereo or other camera) 256, a LIDAR sensor 258, a RADAR sensor 260, or another 3D data sensor 262.

Fill control system 114 then receives container dimension data (such as dimension data for a receiving vehicle or other container) as indicated by block 264. The dimension data can identify an origin point and other points in the container coordinate system, as indicated by block 266, as well as dimension data such as the length, width, and height of the container, as indicated by block 268. The dimension data can include other data 270 as well. The dimension data can be received prior to the unloading operation or detected or received during runtime as the unloading operation commences or received or obtained in other ways.

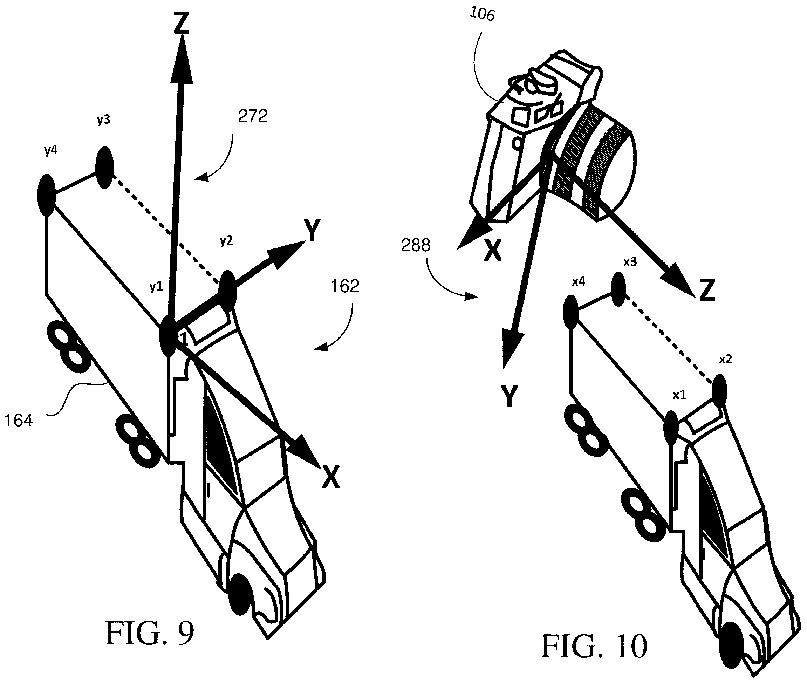

FIG. 9 shows one example of a coordinate system 272 for a receiving vehicle, where the receiving vehicle is semi-truck 162. Coordinate system 272 is represented by the X, Y, and Z axes in FIG. 9 with point y1 defining the origin of coordinate system 272. Points y2, y3, and y4 may also be identified in coordinate system 272. Further, the corner points y1-y4 may be identified by designating the origin corner point y1 and then providing the width dimension (the dimension between points y1 and y2 and between points y3 and y4), and the length dimension (the distance between points y1 and y3 and between points y2 and y4). It will be noted that points y1-y4 are coplanar and define the corners of the opening in semi-trailer 164.

Referring again to the flow diagram of FIG. 8, 3D sensor 106 then captures a frame 250 of 3D sensor data corresponding to the receiving vehicle or container, as indicated by block 274. Where 3D sensor 106 is a stereo camera, 3D sensor 106 captures the frame 250 as an image, as indicated by block 276. The frame of 3D sensor data can be captured in other ways as well, as indicated by block 278.

Captured frame 250 is received at transformation generation system 224. Data accessing system 232 accesses the container dimension dated 212, and feature identification system 234 processes the 3D sensor data in captured frame 250 to identify a feature of the receiving vehicle or container in the coordinate system of 3D sensor 106. Processing the 3D sensor data in captured frame 250 to identify a feature of the receiving vehicle or container is indicated by block 280 in the flow diagram of FIG. 8. In one example, feature identification system 234 includes a machine learning system, a convolutional neural network, a disparity image processor, or other image processing or computer vision system, as indicated by block 282.

Also, in one example, feature identification system 234 identifies three corner points or other points, that may be coplanar or on different planes, corresponding to semi-trailer 164. For instance, with reference to FIG. 9, feature identification system 234 can identify three of the corner points y1-y4 in the captured frame 250. Identifying three corner points is indicated by block 284 in the flow diagram of FIG. 8. Feature identification system 234 can identify other features in other ways as well, as indicated by block 286.

It will be noted that the identified feature will be identified in the coordinate system of 3D sensor 106. FIG. 10 shows one example of this, in which 3D sensor 106 includes a stereo camera that has a coordinate system 288 defined by the X, Y, and Z axes. In a captured image or frame 250, when any of the points (e.g., the corner points) are identified by feature identification system 234, the location of the points (designated by any of points x1 - x4 in FIG 10) will be located in coordinate system 288. Thus, sensor-to-container transformation generator 236 generates a transformation based upon the location of the corner points y1-y4 in the coordinate system 272 of receiving vehicle 162 and based upon the location of those points x1 - x4 in the coordinate system 288 of 3D sensor 106. Computing the sensor-to-container transformation for the captured frame 250 based upon the container and point dimension data 212 (which identifies the location of corner points y1-y4 in coordinate system 272) and based upon the identified feature (three of the points x1-x4 in the coordinate system 288 of 3D sensor 2106) is indicated by block 290 in the flow diagram of FIG. 8. In one example, sensor-to-container transformation generator 236 uses a mean square error algorithm described by equation 1 below:
$e {\left(R, c, t\right)}^{2} = \frac{1}{n} {{\sum }_{i = 1}^{n} \left‖\left({y}_{i}-\left({cRx}_{i}+t\right)\right)\right‖}^{2}$
where the estimated transformation minimizes the mean squared error between the points y1-y4 in the trailer coordinate system and the points x1-x4 in the camera coordinate system.

Transformation output system 238 then generates the transformation output 252. Generating such an output is indicated by block 292 in the flow diagram of FIG. 8. The transformation output 252 can be a transformation matrix 294 or another transformation output 296.

Fill level estimation system 266 receives the transformation output 252, as indicated by block 298. Point cloud transformation system 242 uses the transformation output 252 to transform the points in the point cloud in captured frame 250 (and corresponding to the material 110 in the receiving vehicle or container) from the sensor coordinate system 288 to the receiving vehicle or container coordinate system 272. Using the transformation output (e.g., transformation matrix) 252 computed for captured frame 250 to transform the point cloud points in captured frame 250 from one coordinate system to the other is indicated by block 300 in the flow diagram of FIG. 8. Fill level computation system 244 then computes or estimates the fill level of material 110 in the receiving vehicle or container using the transformed points in the point cloud for frame 250. Performing fill level estimation is indicated by block 302 in the flow diagram of FIG. 8.

Control signal generator 228 receives the estimated fill level from fill level estimation system 226 and generates control signals based upon the estimated fill level, as indicated by block 304. The control signals can be used to control operator interface system 222 and/or communication system to generate operator interfaces 180 for operator 182, as indicated by block 306. The control signals can be used to control vehicle steering/propulsion subsystem(s) 192 for the unloading vehicle and/or the receiving vehicle or container, as indicated by block 308. The control signals can be used to control material transfer subsystem(s) 194 (such as the spout and flap actuator(s) 198, unload actuator(s) 200, etc., as indicated by block 310. The control signals can be used to control nudge subsystem 202, as indicated by block 312, and/or to control communication system 208 to communicate with other machines 186, other systems 188, etc., as indicated by block 314. Control signal generator 228 can generate control signals to perform other control operations as well, as indicated by block 316.

Until the unloading operation is complete, as determined at block 318, processing reverts to block 274 where 3D sensor 106 captures another frame of 3D sensor data corresponding to the receiving vehicle or container.

It can thus be seen that the present description describes a system which computes a sensor-to-receiving vehicle or container transformation for every frame of captured 3D data. That transformation is then used to transform point cloud data in the captured frame from the coordinate system of the 3D sensor to the coordinate system of the receiving vehicle or container. The transformed point cloud data can then be used to estimate a fill level of material in the receiving vehicle or container and control signals can be generated based upon the estimated fill level. This eliminates the need to perform a calibration step to identify the location and orientation of the 3D sensor relative to a reference point on the unloading vehicle and thus reduces complexity and computation time resources, and a potential source of error, needed for fill level estimation.

The present discussion has mentioned processors and servers. In one example, the processors and servers include computer processors with associated memory and timing circuitry, not separately shown. The processors or servers are functional parts of the systems or devices to which they belong and are activated by, and facilitate the functionality of the other components or items in those systems.

Also, a number of user interface (UI) displays have been discussed. The UI displays can take a wide variety of different forms and can have a wide variety of different user actuatable input mechanisms disposed thereon. For instance, the user actuatable input mechanisms can be text boxes, check boxes, icons, links, drop-down menus, search boxes, etc. The mechanisms can also be actuated in a wide variety of different ways. For instance, the mechanisms can be actuated using a point and click device (such as a track ball or mouse). The mechanisms can be actuated using hardware buttons, switches, a joystick or keyboard, thumb switches or thumb pads, etc. The mechanisms can also be actuated using a virtual keyboard or other virtual actuators. In addition, where the screen on which the mechanisms are displayed is a touch sensitive screen, the mechanisms can be actuated using touch gestures. Also, where the device that displays the mechanisms has speech recognition components, the mechanisms can be actuated using speech commands.

A number of data stores have also been discussed. It will be noted the data stores can each be broken into multiple data stores. All can be local to the systems accessing the data stores, all can be remote, or some can be local while others are remote. All of these configurations are contemplated herein.

Also, the figures show a number of blocks with functionality ascribed to each block. It will be noted that fewer blocks can be used so the functionality is performed by fewer components. Also, more blocks can be used with the functionality distributed among more components.

It will be noted that the above discussion has described a variety of different systems, components, generators, sensors, and/or logic. It will be appreciated that such systems, components, generators, sensors, and/or logic can be comprised of hardware items (such as processors and associated memory, or other processing components, some of which are described below) that perform the functions associated with those systems, components, generators, sensors, and/or logic. In addition, the systems, components, generators, sensors, and/or logic can be comprised of software that is loaded into a memory and is subsequently executed by a processor or server, or another computing component, as described below. The systems, components, generators, sensors, and/or logic can also be comprised of different combinations of hardware, software, firmware, etc., some examples of which are described below. These are only some examples of different structures that can be used to form the systems, components, generators, sensors, and/or logic described above. Other structures can be used as well.

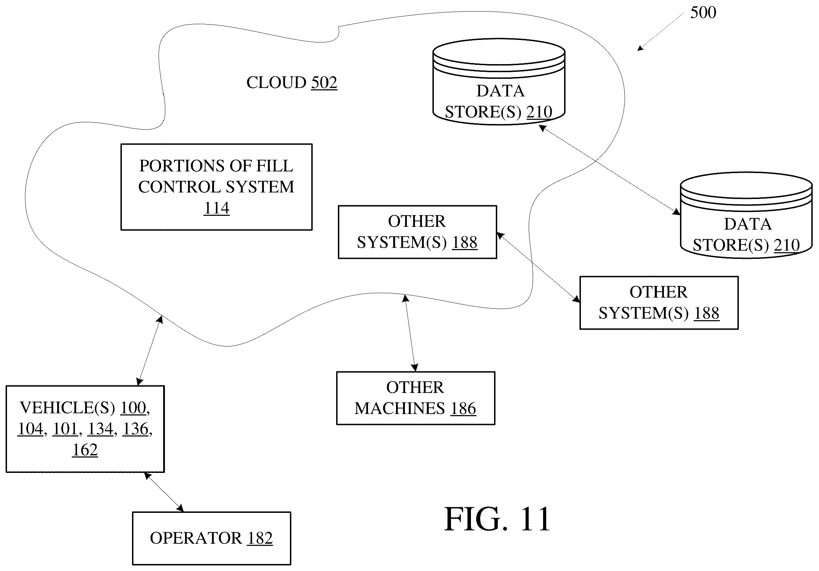

FIG. 11 is a block diagram of an unloading system communicating with elements in a remote server architecture 500. In an example, remote server architecture 500 can provide computation, software, data access, and storage services that do not require end-user knowledge of the physical location or configuration of the system that delivers the services. In various examples, remote servers can deliver the services over a wide area network, such as the internet, using appropriate protocols. For instance, remote servers can deliver applications over a wide area network and they can be accessed through a web browser or any other computing component. Software or components shown in previous FIGS. as well as the corresponding data, can be stored on servers at a remote location. The computing resources in a remote server environment can be consolidated at a remote data center location or they can be dispersed. Remote server infrastructures can deliver services through shared data centers, even though they appear as a single point of access for the user. Thus, the components and functions described herein can be provided from a remote server at a remote location using a remote server architecture. Alternatively, the components and functions can be provided from a conventional server, or they can be installed on client devices directly, or in other ways.

In the example shown in FIG. 11, some items are similar to those shown in previous FIGS. and they are similarly numbered. FIG. 11 specifically shows that transformation generation system 224 (or parts of system 224), fill level estimation system 226 (or parts of system 226), data store 210, other systems 188, and/or other parts of the unloading system, can be located at a remote server location 502. Therefore, components of the unloading system accesses those systems through remote server location 502.

FIG. 11 also depicts another example of remote server architecture. FIG. 11 shows that it is also contemplated that some elements of previous FIGS are disposed at remote server location 502 while others are not. By way of example, data store 210 and/or other systems 188 can be disposed at a location separate from location 502 and accessed through the remote server at location 502. Regardless of where the items are located, they can be accessed directly by components of the unloading system, through a network (either a wide area network or a local area network), the items can be hosted at a remote site by a service, or the items can be provided as a service, or accessed by a connection service that resides in a remote location. Also, data can be stored in substantially any location and intermittently accessed by, or forwarded to, interested parties. All of these architectures are contemplated herein.

It will also be noted that the elements of previous FIGS., or portions of them, can be disposed on a wide variety of different devices. Some of those devices include servers, desktop computers, laptop computers, tablet computers, or other mobile devices, such as palm top computers, cell phones, smart phones, multimedia players, personal digital assistants, etc.

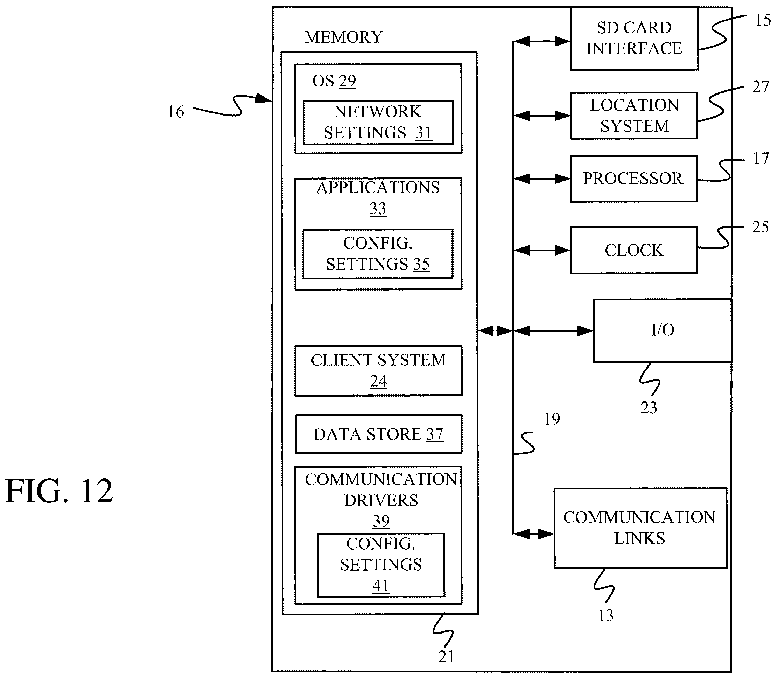

FIG. 12 is a simplified block diagram of one illustrative example of a handheld or mobile computing device that can be used as a user's or client's handheld device 16, in which the present system (or parts of it) can be deployed. For instance, a mobile device can be deployed in the operator compartment of harvester 100 for use in generating, processing, or displaying the estimated fill height data. FIGS. 12-14 are examples of handheld or mobile devices.

FIG. 12 provides a general block diagram of the components of a client device 16 that can run some components shown in previous FIGS., that interacts with them, or both. In the device 16, a communications link 13 is provided that allows the handheld device to communicate with other computing devices and under some examples provides a channel for receiving information automatically, such as by scanning. Examples of communications link 13 include allowing communication though one or more communication protocols, such as wireless services used to provide cellular access to a network, as well as protocols that provide local wireless connections to networks.

In other examples, applications can be received on a removable Secure Digital (SD) card that is connected to an interface 15. Interface 15 and communication links 13 communicate with a processor 17 (which can also embody processors or servers from previous FIGS.) along a bus 19 that is also connected to memory 21 and input/output (I/O) components 23, as well as clock 25 and location system 27.

I/O components 23, in one example, are provided to facilitate input and output operations. I/O components 23 for various examples of the device 16 can include input components such as buttons, touch sensors, optical sensors, microphones, touch screens, proximity sensors, accelerometers, orientation sensors and output components such as a display device, a speaker, and or a printer port. Other I/O components 23 can be used as well.

Clock 25 illustratively comprises a real time clock component that outputs a time and date. It can also, illustratively, provide timing functions for processor 17.

Location system 27 illustratively includes a component that outputs a current geographical location of device 16. This can include, for instance, a global positioning system (GPS) receiver, a dead reckoning system, a cellular triangulation system, or other positioning system. Location system 27 can also include, for example, mapping software or navigation software that generates desired maps, navigation routes and other geographic functions.

Memory 21 stores operating system 29, network settings 31, applications 33, application configuration settings 35, data store 37, communication drivers 39, and communication configuration settings 41. Memory 21 can include all types of tangible volatile and non-volatile computer-readable memory devices. Memory 21 can also include computer storage media (described below). Memory 21 stores computer readable instructions that, when executed by processor 17, cause the processor to perform computer-implemented steps or functions according to the instructions. Processor 17 can be activated by other components to facilitate their functionality as well.

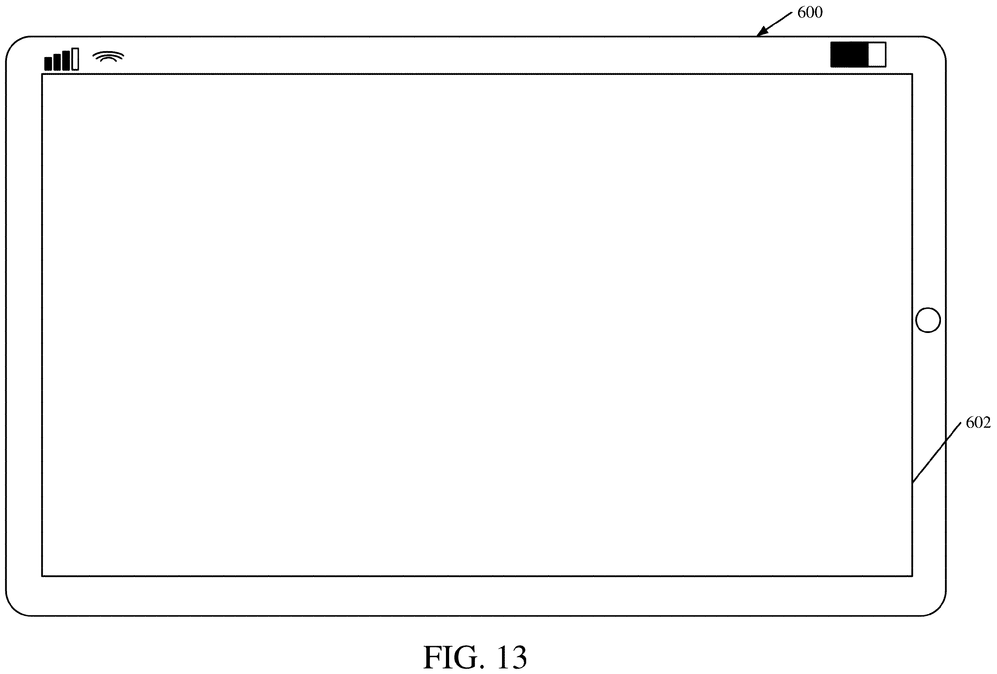

FIG. 13 shows one example in which device 16 is a tablet computer 600. In FIG. 16, computer 600 is shown with user interface display screen 602. Screen 602 can be a touch screen or a pen-enabled interface that receives inputs from a pen or stylus. Computer 600 can also use an on-screen virtual keyboard. Of course, computer 600 might also be attached to a keyboard or other user input device through a suitable attachment mechanism, such as a wireless link or USB port, for instance. Computer 600 can also illustratively receive voice inputs as well.

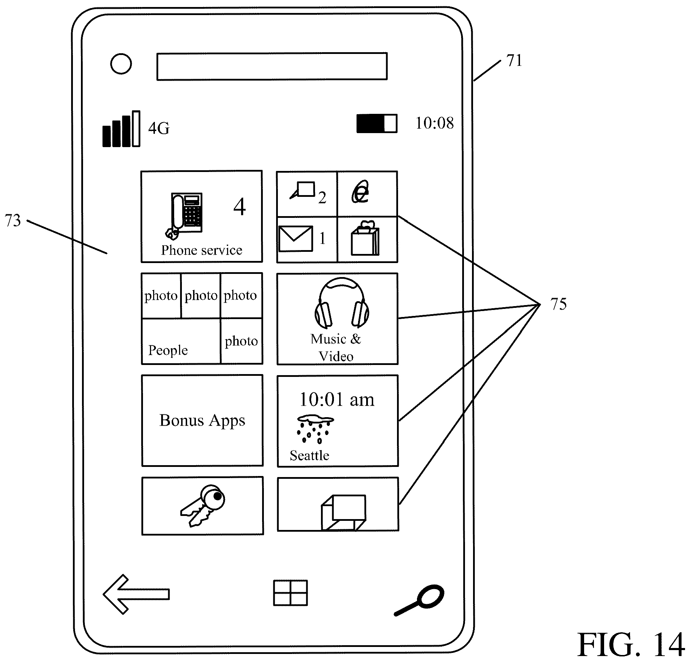

FIG. 14 shows that the device can be a smart phone 71. Smart phone 71 has a touch sensitive display 73 that displays icons or tiles or other user input mechanisms 75. Mechanisms 75 can be used by a user to run applications, make calls, perform data transfer operations, etc. In general, smart phone 71 is built on a mobile operating system and offers more advanced computing capability and connectivity than a feature phone.

Note that other forms of the devices 16 are possible.

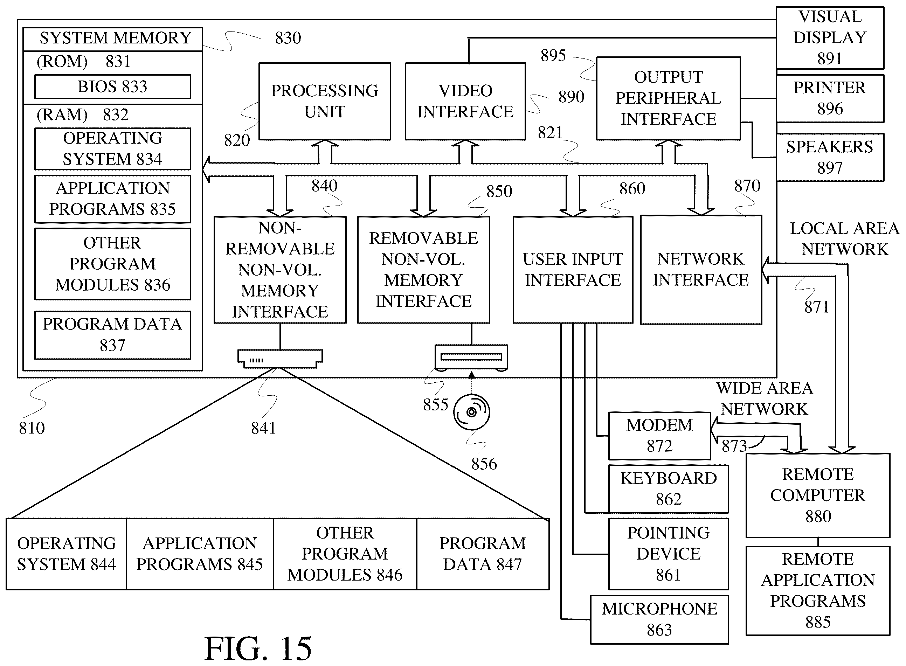

FIG. 15 is one example of a computing environment in which elements of previous

FIGS., or parts of it, (for example) can be deployed. With reference to FIG. 15, an example system for implementing some embodiments includes a computing device in the form of a computer 810 programmed to operate as described above. Components of computer 810 may include, but are not limited to, a processing unit 820 (which can comprise processors or servers from previous FIGS.), a system memory 830, and a system bus 821 that couples various system components including the system memory to the processing unit 820. The system bus 821 may be any of several types of bus structures including a memory bus or memory controller, a peripheral bus, and a local bus using any of a variety of bus architectures. Memory and programs described with respect to previous FIGS. can be deployed in corresponding portions of FIG. 15.

Computer 810 typically includes a variety of computer readable media. Computer readable media can be any available media that can be accessed by computer 810 and includes both volatile and nonvolatile media, removable and non-removable media. By way of example, and not limitation, computer readable media may comprise computer storage media and communication media. Computer storage media is different from, and does not include, a modulated data signal or carrier wave. Computer storage media includes hardware storage media including both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 810. Communication media may embody computer readable instructions, data structures, program modules or other data in a transport mechanism and includes any information delivery media. The term "modulated data signal" means a signal that has one or more of its characteristics set or changed in such a manner as to encode information in the signal.

The system memory 830 includes computer storage media in the form of volatile and/or nonvolatile memory such as read only memory (ROM) 831 and random access memory (RAM) 832. A basic input/output system 833 (BIOS), containing the basic routines that help to transfer information between elements within computer 810, such as during start-up, is typically stored in ROM 831. RAM 832 typically contains data and/or program modules that are immediately accessible to and/or presently being operated on by processing unit 820. By way of example, and not limitation, FIG. 15 illustrates operating system 834, application programs 835, other program modules 836, and program data 837.

The computer 810 may also include other removable/non-removable volatile/nonvolatile computer storage media. By way of example only, FIG. 15 illustrates a hard disk drive 841 that reads from or writes to non-removable, nonvolatile magnetic media, an optical disk drive 855, and nonvolatile optical disk 856. The hard disk drive 841 is typically connected to the system bus 821 through a non-removable memory interface such as interface 840, and optical disk drive 855 are typically connected to the system bus 821 by a removable memory interface, such as interface 850.

Alternatively, or in addition, the functionality described herein can be performed, at least in part, by one or more hardware logic components. For example, and without limitation, illustrative types of hardware logic components that can be used include Field-programmable Gate Arrays (FPGAs), Application-specific Integrated Circuits (e.g., ASICs), Application-specific Standard Products (e.g., ASSPs), System-on-a-chip systems (SOCs), Complex Programmable Logic Devices (CPLDs), etc.

The drives and their associated computer storage media discussed above and illustrated in FIG. 15, provide storage of computer readable instructions, data structures, program modules and other data for the computer 810. In FIG. 15, for example, hard disk drive 841 is illustrated as storing operating system 844, application programs 845, other program modules 846, and program data 847. Note that these components can either be the same as or different from operating system 834, application programs 835, other program modules 836, and program data 837.

A user may enter commands and information into the computer 810 through input devices such as a keyboard 862, a microphone 863, and a pointing device 861, such as a mouse, trackball or touch pad. Other input devices (not shown) may include a joystick, game pad, satellite dish, scanner, or the like. These and other input devices are often connected to the processing unit 820 through a user input interface 860 that is coupled to the system bus, but may be connected by other interface and bus structures. A visual display 891 or other type of display device is also connected to the system bus 821 via an interface, such as a video interface 890. In addition to the monitor, computers may also include other peripheral output devices such as speakers 897 and printer 896, which may be connected through an output peripheral interface 895.

The computer 810 is operated in a networked environment using logical connections (such as a controller area network - CAN, local area network - LAN, or wide area network WAN) to one or more remote computers, such as a remote computer 880.

When used in a LAN networking environment, the computer 810 is connected to the LAN 871 through a network interface or adapter 870. When used in a WAN networking environment, the computer 810 typically includes a modem 872 or other means for establishing communications over the WAN 873, such as the Internet. In a networked environment, program modules may be stored in a remote memory storage device. FIG. 15 illustrates, for example, that remote application programs 885 can reside on remote computer 880.

It should also be noted that the different examples described herein can be combined in different ways. That is, parts of one or more examples can be combined with parts of one or more other examples. All of this is contemplated herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer implemented method, comprising:
Accessing (264) container dimension data indicative of dimensions of a container;
Capturing (274) a set of three-dimensional (3D) data corresponding to the container, with a sensor, the set of 3D data including data corresponding to a feature of the container and data points corresponding to a fill level of material in the container;
Identifying (280) the feature of the container, in a coordinate system of the sensor, based on the set of 3D data;
Generating (290) a transform, based on the container dimension data and the identified feature of the container, to transform points in the coordinate system of the sensor into points in a coordinate system of the container; and
Applying (300) the transform to the data points corresponding to the fill level of material in the container to obtain a set of transformed points.

2. The computer implemented method of claim 1 and further comprising:
generating a fill level of the container based on the set of transformed points.

3. The computer implemented method of claim 2 and further comprising:
generating a control signal based on the fill level of the container.

4. The computer implemented method of claim 1 wherein accessing container dimension data comprises:
accessing an origin point indicative of an origin of the coordinate system of the container; and
accessing length data indicative of a length of the container, width data indicative of a width of the container, and height data indicative of a height of the container.

5. The computer implemented method of claim 1 wherein identifying a feature of the container comprises:
identifying a set of points defining a portion of an opening in the container, wherein generating the transform comprises generating the transform based on the container dimension data and the set of points.

6. The computer implemented method of claim 5 wherein identifying the set of points comprises:
identifying three corner points defining the opening of the container.

7. The computer implemented method of claim 6 wherein the 3D sensor comprises a stereo camera and wherein capturing the set of 3D data comprises:
capturing an image of the container with the stereo camera.

8. The computer implemented method of claim 7 wherein identifying three corner points defining the opening of the container comprises:
performing image processing on the captured image of the container to identify three co-planar corner points.

9. The computer implemented method of claim 8 wherein capturing an image of the container comprises capturing a plurality of images of the container, and further comprising:
for each image, of the plurality of images, repeating steps of:
performing image processing on the captured image of the container to identify the three co-planar corner points;
generating a transform based on the container dimension data and the three co-planar corner points; and
applying the transform to data points in the captured image corresponding to the fill level of material in the container to obtain the set of transformed points.

10. A control system, comprising
a data accessing system(232) configured to access container dimension data indicative of dimensions of a container;
a three-dimensional (3D) sensor(106) configured to capture a set of 3D data corresponding to the container, the set of 3D data including data corresponding to a feature of the container and data points corresponding to a fill level of material in the container;
a feature identification system(234) configured to identify the feature of the container, in a coordinate system of the 3D sensor, based on the set of 3D data;
a sensor-to-container transformation generator(236) configured to generate a transform, based on the container dimension data and the identified feature of the container, to transform points in the coordinate system(242) of the sensor into points in a coordinate system of the container; and
a transformation system configured to apply the transform to the data points corresponding to the fill level of material in the container to obtain a set of transformed points.

11. The control system of claim 10 and further comprising:
a fill level estimation system configured to generate a fill level of the container based on the set of transformed points; and
a control signal generator configured to generate a control signal based on the fill level of the container.

12. The control system of claim 10 wherein the data accessing system is configured to access an origin point indicative of an origin of the coordinate system of the container, and wherein the feature identification system is configured to identify, as the feature, a set of points defining a portion of an opening in the container.

13. The control system of claim 12 wherein the feature identification system is configured to identify, as the set of points, three corner points defining the opening of the container.

14. The control system of claim 13 wherein the 3D sensor comprises:
a stereo camera configured to capture an image of the container with the stereo camera.

15. The control system of claim 14 wherein the feature identification system is configured to perform image processing on the captured image of the container to identify the three corner points defining the opening of the container.

## Amended claims

### Amended claims in accordance with Rule 137(2) EPC.

1. A computer implemented method, comprising:
accessing (264) container dimension data (212) indicative of dimensions of a container;
capturing (274) a set of three-dimensional, 3D, point cloud data corresponding to the container, with a sensor (106), the set of 3D point cloud data including data corresponding to a feature of the container and data points corresponding to a fill level of material in the container;
identifying (280) the feature of the container, in a coordinate system of the sensor (106), based on the set of 3D point cloud data;
generating (290) a transformation matrix (294), based on the container dimension data (212) and the identified feature of the container, to transform the data points in the coordinate system of the sensor (106) into points in a coordinate system of the container;
applying (300) the transformation matrix (294) to the data points corresponding to the fill level of material in the container to obtain a set of transformed points;
generating a fill level of the container based on the set of transformed points, and
generating a control signal based on the fill level of the container.

2. The computer implemented method of claim 1 wherein accessing container dimension data comprises:
accessing an origin point indicative of an origin of the coordinate system of the container; and
accessing length data indicative of a length of the container, width data indicative of a width of the container, and height data indicative of a height of the container.

3. The computer implemented method of claim 1 wherein identifying a feature of the container comprises:
identifying a set of points defining a portion of an opening in the container, wherein generating the transform comprises generating the transform based on the container dimension data and the set of points.

4. The computer implemented method of claim 3 wherein identifying the set of points comprises:
identifying three corner points defining the opening of the container.

5. The computer implemented method of claim 4 wherein the 3D sensor comprises a stereo camera and wherein capturing the set of 3D data comprises:
capturing an image of the container with the stereo camera.

6. The computer implemented method of claim 5 wherein identifying three corner points defining the opening of the container comprises:
performing image processing on the captured image of the container to identify three co-planar corner points.

7. The computer implemented method of claim 6 wherein capturing an image of the container comprises capturing a plurality of images of the container, and further comprising:
for each image, of the plurality of images, repeating steps of:
performing image processing on the captured image of the container to identify the three co-planar corner points;
generating a transform based on the container dimension data and the three co-planar corner points; and
applying the transform to data points in the captured image corresponding to the fill level of material in the container to obtain the set of transformed points.

8. A control system, comprising
a data accessing system (232) configured to access container dimension data indicative of dimensions of a container;
a three-dimensional, 3D, sensor (106) configured to capture a set of 3D point cloud data corresponding to the container, the set of 3D point cloud data including data corresponding to a feature of the container and data points corresponding to a fill level of material in the container;
a feature identification system (234) configured to identify the feature of the container, in a coordinate system of the 3D sensor (106), based on the set of 3D point cloud data;
a sensor-to-container transformation generator (236) configured to generate a transform matrix (294), based on the container dimension data and the identified feature of the container, to transform the data points in the coordinate system (242) of the sensor (106) into points in a coordinate system of the container;
a transformation system configured to apply the transform matrix to the data points corresponding to the fill level of material in the container to obtain a set of transformed points,
a fill level estimation system configured to generate a fill level of the container based on the set of transformed points; and
a control signal generator configured to generate a control signal based on the fill level of the container.

9. The control system of claim 8 wherein the data accessing system is configured to access an origin point indicative of an origin of the coordinate system of the container, and wherein the feature identification system is configured to identify, as the feature, a set of points defining a portion of an opening in the container.

10. The control system of claim 9 wherein the feature identification system is configured to identify, as the set of points, three corner points defining the opening of the container.

11. The control system of claim 10 wherein the 3D sensor comprises:
a stereo camera configured to capture an image of the container with the stereo camera.
